# EUROPEAN PATENT SPECIFICATION

(11) **EP 2 541 349 B1**
(45) Date of publication and mention of the grant of the patent: **06.05.2020**
(21) Application number: 12169695.9
(22) Date of filing: 29.05.2012
(51) Int. Cl.: G05B 19/042, H02H 7/122

(54) **Inverter system having a safety module**
Umrichtersystem mit Sicherheitsmodul
Système d'onduleur ayant un module de sécurité

(30) Priority: 16.06.2011 JP 2011133925
(43) Date of publication of application: 02.01.2013
(73) Proprietor: Fuji Electric Co., Ltd., Kawasaki-shi Kanagawa 210-9530 (JP)
(72) Inventor: Tsukuta, Motohiro, Kawasaki-shi, Kanagawa 210-9530 (JP)
(74) Representative: MERH-IP Matias Erny Reichl Hoffmann Patentanwälte PartG mbB

(56) References cited:
- EP-A2- 1 717 653
- EP-A2- 2 413 484
- US-A1- 2010 327 667

## Description

### BACKGROUND OF INVENTION

### 1. Field of the Invention

The present invention relates to an inverter system provided with a communication function carrying out transmission and reception of communication data with an external controller through a network and a safety function established by the communication data.

### 2. Background Art

At present, various industrial communication systems have been standardized (for example, PROFIBUS (registered trade mark), EtherCAT (registered trade mark), Ethernet/IP (registered trade mark) etc.). Moreover, some communication systems are compatible to safety communications with signals relating to safety (signals for emergency stopping, safety brake control, electric power interruption etc.). In order to be compatible to such communication systems, an inverter system must have a safety device provided therein.

In addition, as a safety device used for the safety use such as a safety network controller and a safety I/O terminal, a safety I/O terminal such as that in the following is known (see JP-A-2006-325390, for example).

The safety I/O terminal is a safety I/O terminal which has an input device, designed in conformity with safety standards, connected thereto from which device on-off signals are inputted and, along with this, is connected through a network to a safety controller, designed in conformity with safety standards, to transmit the signal inputted from the input device to a communication master unit on the safety controller side.

Furthermore, the safety I/O terminal includes at least one input terminal to which the input signal from the input device designed in conformity with safety standards is given, a test terminal used in common with a test OUT specification and at least one of an unused specification, a standard output specification, a power supply specification and a muting lamp specification, a storage means storing established contents of specifications with respect to the test terminal, and a microcomputer carrying out processing with respect to the test terminal according to an established content of the specification stored in the storage means, the microcomputer outputting a test signal for making a decision on the presence or absence of abnormality from the test terminal when the stored established content of the specification is the test OUT specification with respect to the test terminal and, along with this, when the stored established content of the specification is that of another specification, carrying out processing with respect to the test terminal according to the specification.

According to the safety I/O terminal, a safety device can be provided which is capable of being flexibly compatible to any inputting and outputting device with various functions and terminal compositions by one device.

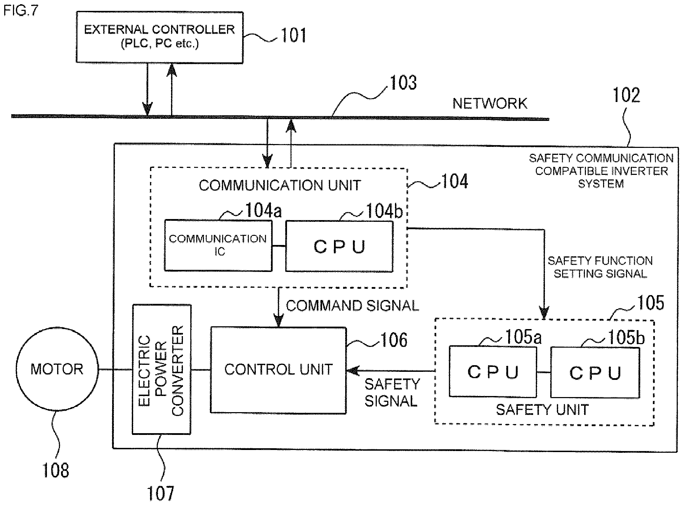

Incidentally, for a related inverter system compatible to safety communications, a system having the configuration as shown in FIG. 7 is generally provided. In the configuration, a safety communication compatible inverter system 102 is connected to an external controller 101 formed of units such as a program controller (PLC) and a personal computer (PC) through a network 103. The inverter system 102 is formed of a communication unit 104 connected to the network 103 and carrying out transmission and reception of communication data, a safety unit 105 to which a safety function setting signal included in the communication data is inputted, a control unit 106 to which a command signal outputted from the communication unit 104 and a safety signal outputted from the safety unit 105 are supplied and an electric power converter 107 controlled by the control unit 106. An output signal of the electric power converter 107 is then supplied to a motor 108, which is subjected to driving control.

Here, the communication unit 104 is provided with a communication IC 104a and a central processing unit (CPU) 104b. The communication IC 104a carries out transmission and reception of communication data with the network 103. The central processing unit 104b separates the communication data received by the communication IC 104a into a command signal as a signal for common control and a safety function setting signal as a signal for operating the safety function used by the safety unit 105.

Moreover, the safety unit 105 is provided with two central processing units (CPUs) 105a and 105b and is made redundant with the central processing units (CPUs) 105a and 105b to carry out such safety processing that when one of the central processing unit 105a (or 105b) causes failure, the other central processing unit 105b (or 105a) detects the failure to make the inverter system 102 stopped, and output a safety signal to the control unit 106.

Patent Document 2 discloses a safety device such as a safety I/O terminal for connecting to an input device designed based on a safety standard, to which an on-off signal is input, connecting to a safety controller designed based on a safety standard via a network, and transmitting the signal input from the input device to a communication master unit of the safety controller, including: one or more input terminals configured to be given the input signal from the input device compliant with the safety standard.

[Patent Document 1] JP-A-2006-325390
[Patent Document 2] EP 1717653 A2

In the inverter system shown in FIG. 7, however, for being compatible to safety communications, such kinds of processing as to make the processing unit redundant in the safety unit and to separate a signal in the communication unit become necessary. Thus, there is an unsolved problem in that many processing units are used to make the configuration in the inverter system become complicated. Moreover, for making the processing units redundant and carrying out mutual diagnosis of the processing units, intercommunications of data among the processing units become necessary to result in a large number of processing units, which causes delays due to such intercommunications. Thus, there is also an unsolved problem in that much time is taken from the reception of a safety signal to an actual operation for making safety (such an operation as to shut down an electric power converter).

Accordingly, the invention was made by giving attention to the unsolved problems in the related example with an object of providing an inverter system that can reduce the number of processing units for carrying out safety processing.

### SUMMARY OF THE INVENTION

For achieving the object, the invention provides an inverter system according claim 1. Further aspects of the invention are set forth in the drawings and the following description of embodiments.

### BRIEF DESCRIPTION OF THE DRAWINGS

FIG. 1 is a block diagram showing a system configuration of an inverter system according to the invention;
FIG. 2 is a schematic illustration showing a data structure of a communication message transmitted from an external controller;
FIG. 3 is a flow chart showing an example of the procedure of communication and safety processing executed in a communication module;
FIG. 4 is a flow chart showing an example of the procedure of safety processing executed in a communication module;
FIG. 5 is a flow chart showing an example of the procedure of processing at starting executed in a control unit;
FIG. 6 is a flow chart showing an example of the procedure of control processing executed in the control unit; and
FIG. 7 is a block diagram showing a general configuration of a related inverter system.

### DESCRIPTION OF THE PREFERRED EMBODIMENT

In the following, an embodiment of the invention will be explained on the basis of the attached drawings.

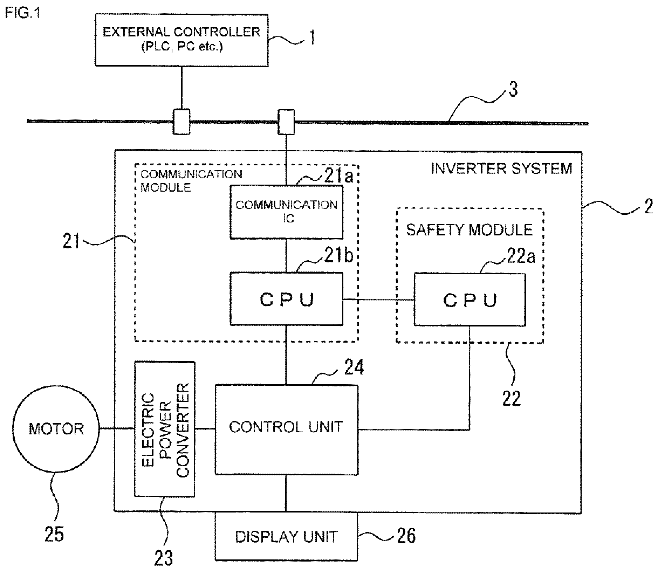

FIGURE 1 is a block diagram showing a system configuration of an inverter system according to the invention. In FIG. 1, an external controller 1 formed of constituents such as a programmable controller (PLC) and a personal computer (PC) and an inverter system 2 that is safety communication compatible are connected through a network 3. Here, the network 3 carries out transmission and reception of communication data with the use of industrial communication systems such as PROFIBUS (registered trade mark), EtherCAT (registered trade mark) and Ethernet/IP (registered trade mark), for example.

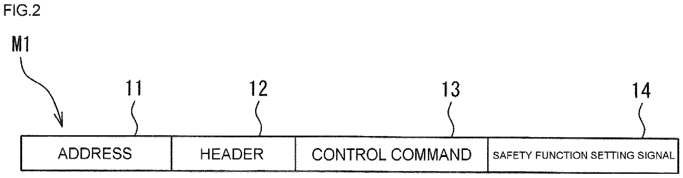

The external controller 1 transmits the communication message M1 with a data structure shown in FIG. 2 to the inverter system 2. The frame structure of the communication message M1 includes an address storage region 11, a header storage region 12, a control command storage region 13 and a safety function setting signal storage section 14. The address storage region 11 stores an inherent address representing the inverter system 2 in the network 3, the header storage region 12 stores a header indicating an item such as a data format of a message, the control command storage region 13 stores a control command for controlling a motor by the inverter system 2, and the safety function setting signal storage region 14 stores a safety function setting signal for operating safety functions. Here, when carrying out error detection of the whole communication message M1, an error code such as a frame check sequence FCS is added to the end of the message frame. In addition, the frame structure of a communication message is not limited to the above frame structure but the frame structure of the message becomes different depending on the corresponding communication standard.

The inverter system 2 is provided with a communication module 21, a safety module 22, an electric power converter 23 and a control unit 24. The communication module 21 is a module connected to the network 3 as a communication processing section having a part of safety function added to the communication function thereof, the safety module 22 is a module as a safety processing section to which a safety function setting signal is inputted from the communication module 21, and the control unit 24 has a command signal and a safety signal inputted from the communication module 21 and, along with this, has a safety signal inputted from the safety module 22 to control the electric power converter 23 on the basis of the inputted signals. Moreover, a driving signal outputted from the electric power converter 23 is inputted to a motor 25. In addition, to the control unit 24, a display unit 26 is connected.

The communication module 21 includes a communication IC 21a and a central processing unit (CPU) 21b. The communication IC 21a is connected to the network 3 to carry out transmission and reception of communication data with procedures meeting the adopted communication system and the central processing unit 21b is connected to the communication IC 21a to be operated as a processing unit for actualizing a communication function and a part of a safety function.

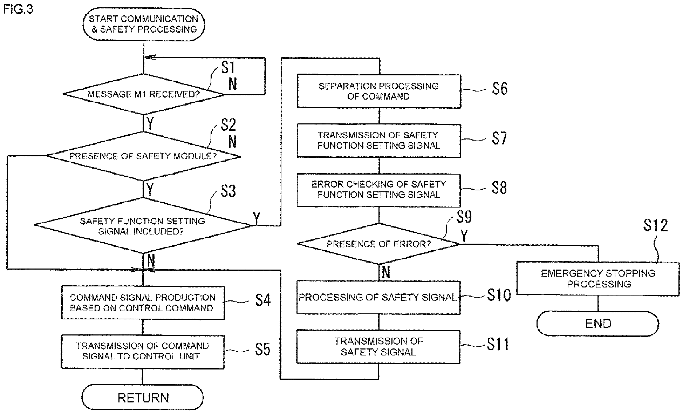

The central processing unit 21b carries out execution of communication and safety processing shown in FIG. 3. FIGURE 3 is a flow chart showing an example of the procedure of communication and safety processing executed in a communication module. As is shown in FIG. 3, in the communication and safety processing, first at the step S1, decision is made as to whether or not a communication message M1 from the external controller 1 has been received through the network 3. When no communication message M1 is received, the processing is made to wait until the communication message M1 is received. When the communication message M1 is received, the processing is made to shift to the step S2.

At the step S2, decision is made as to whether there is the presence of the safety module 22 or not. The decision is made on the basis of the results of recognition of the presence or absence of the communication module 21 and the safety module 22 in the processing at starting carried out at the starting of the control unit 24 and will be explained later. Since the result of the recognition of the presence or absence of the safety module 22 has been informed, the decision as to whether there is the presence of the safety module or not is made on the basis of the informed result of the recognition.

When the result of the decision at the step S2 is that no safety module 22 is presented, the processing is made to jump to the step S4. When the result of the decision is that the safety module 22 is presented, the processing is made to shift to the step S3 at which decision is made as to whether or not the safety function setting signal is included in the communication message M1. When the safety function setting signal is included in the communication message M1, the processing is made to shift to the step S6 that will be explained later. When no safety function setting signal is included in the communication message M1, the process is made to shift to the step S4.

At the step S4, a command signal to the control unit 24 is produced on the basis of the control command included in the communication message M1. Following this, the processing is made to shift to the step S5, at which the command signal is transmitted to the control unit 24 before the processing is made to return to the step S1.

Moreover, at the step S6, dividing processing is carried out which divides the data part of the communication message M1 containing a control command and a safety function setting signal into the control command and the safety function setting signal before the processing is made to shift to the step S7.

At the step S7, the safety function setting signal is transmitted to the safety module 22. Then, the processing is made to shift to the step S8 at which an error checking of the safety function setting signal is carried out. When a decision is made at the step S9 that no error is found in the result of the error checking, the processing is made to shift to the step S10 at which an safety signal processing is carried out on the basis of the safety function setting signal to produce a safety signal SS1 corresponding to the safety function setting signal.

Following this, the processing is made to shift to the step S11, at which the produced safety signal SS1 is transmitted to the control unit 24. Then, the processing is made to shift to the step S4.

When a decision is made at the step S9 that an error is found in the safety function setting signal as a result of the error checking, the processing is made to shift to the step S12, at which emergency stopping processing is carried out for stopping the motor 25 before the processing is made to return to the step S1.

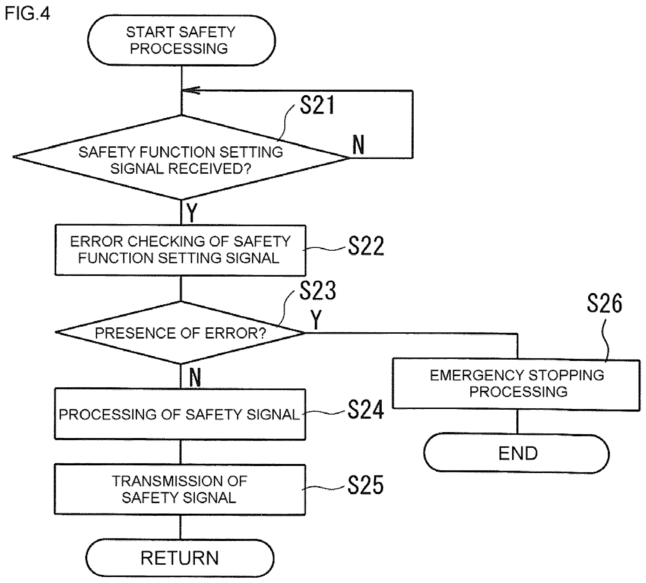

The safety module 22 is provided with a central processing unit (CPU) 22a as a processing unit. The central processing unit (CPU) 22a executes safety processing shown in FIG. 4.

FIGURE 4 is a flow chart showing an example of the procedure of safety processing executed in a safety module. In the safety processing, as is shown in FIG. 4, a decision is made first at the step S21 as to whether the safety function setting signal transmitted from the central processing unit 21b is received or not. When the safety function setting signal is not received yet, the processing is made to wait until the signal is received. When the safety function setting signal is received, the processing is made to shift to the step S22.

At the step S22 an error check is carried out with respect to the received safety function setting signal. Then, the processing is made to shift to the step S23 to make a decision as to whether or not an error is found as a result of the error checking of the safety function setting signal. When no error is found, the processing is made to shift to the step S24 at which an safety signal processing is carried out on the basis of the safety function setting signal to produce a safety signal SS2 corresponding to the safety function setting signal.

Next to this, the processing is made to shift to the step S25, at which the produced safety signal SS2 is transmitted to the control unit 24 before the processing is made to return to the step S21.

In addition, when a decision is made at the step S23 that an error is found in the safety function setting signal, the processing is made to shift to the step S26, at which emergency stopping processing is carried out for stopping the motor 25 before the processing is made to return to the step S21.

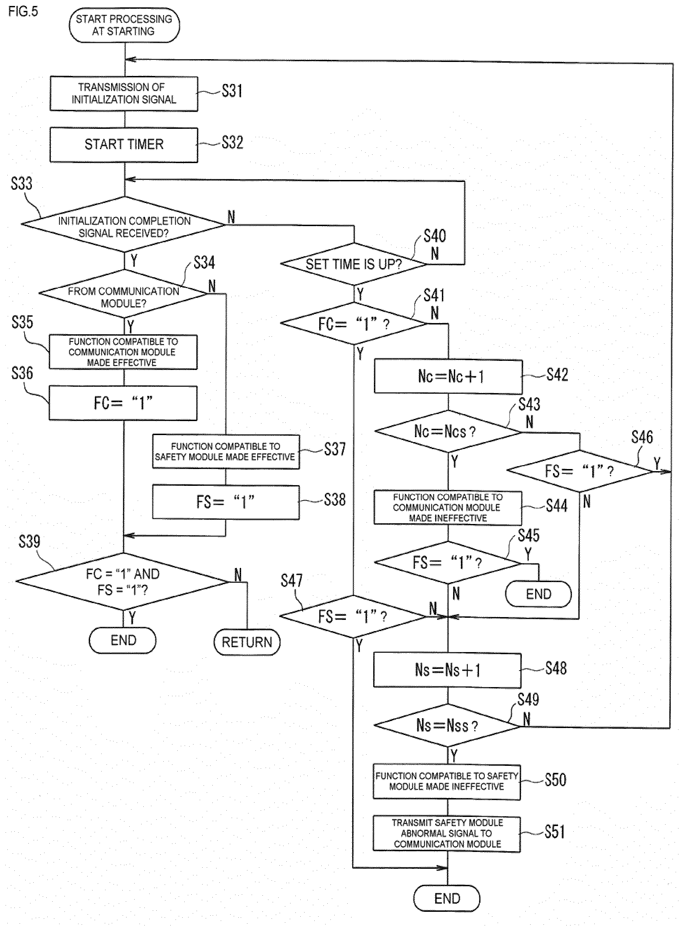

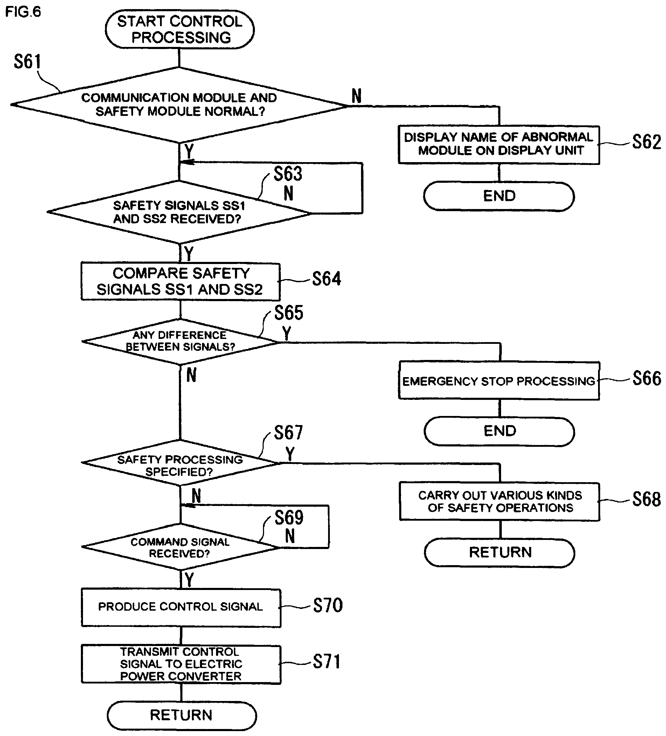

The control unit 24 is formed with a processing unit such as a microcomputer included to execute processing at starting shown in FIG. 5 at the starting of the control unit 24 and, along with this, executes control processing shown in FIG. 6 after the starting. FIGURE 5 is a flow chart showing an example of the procedure of processing at starting executed in the control unit 24 and FIGURE 6 is a flow chart showing an example of the procedure of control processing executed in the control unit 24. In the processing at starting, as shown in FIG. 5, first at the step S31, an initialization signal is transmitted from the control unit 24 before the processing is made to shift to the step S32. The initialization signal is transmitted to any module of the communication module 21 and the safety module 22 with a normal flag that will be explained later reset to "0". The normal flag of the communication module 21 is a communication module normal flag FC of the central processing unit 21b and the normal flag of the safety module 22 is a safety module normal flag FS of the central processing unit 22a.

At the step S32, a software timer is made to start which is set for a necessary time from the transmission of the initialization signal at the step 31 under a normal condition to the transmission of an initialization completion signal from each of the central processing unit 21b in the communication module 21 and the central processing unit 22a in the safety module 22 before the process is made to shift to the step 33.

At the step 33, a decision is made as to whether or not an initialization completion signal is received from one of the communication module 21 and the safety module 22. When an initialization completion signal is received, the processing is made to shift to the step 34, at which a decision is made as to whether the received initialization completion signal is that from the communication module 21 or not. When the result of the decision at the step S34 is that the received initialization completion signal is to be the signal from the communication module 21, the processing is made to shift to the step S35, at which a function compatible to the communication module 21 is made effective before the processing is made to shift to the step S36. At the step S36, the communication module normal flag FC indicating that the communication module 21 is normal is set to "1" before the processing is made to shift to the step S39.

While, when the result of the decision at the step S34 is that the received initialization completion signal is not the signal from the communication module 21, a decision is made that the received initialization completion signal is the signal from the safety module 22 and the processing is made to shift to the step S37, at which a function compatible to the safety module 22 is made effective before the processing is made to shift to the step S38. At the step S38, the safety module normal flag FS indicating that the safety module 22 is normal is set to "1" before the processing is made to shift to the step S39.

At the step S39, a decision is made as to whether or not the communication module normal flag FC is set to "1" and the safety module normal flag FS is set to "1" to indicate that both of the communication module 21 and the safety module 22 are normal. When the communication module normal flag FC is "1" and the safety module normal flag FS is "1", the processing at starting is terminated without any additional processing. When either of the communication module normal flag FC or the safety module normal flag FS is "1", the processing is made to return to the step S31.

While, when the result of the decision at the step S33 is that the initialization completion signal is not received yet, the processing is made to shift to the step S40, at which a decision is made as to whether the time set by the timer made started at the step S32 is up or not. When the set time is not up yet, the processing is made to return to the step S33. While, when the set time is up, the processing is made to shift to the step S41.

At the step S41, a decision is made as to whether the communication module normal flag FC is set to "1" or not. When no communication module normal flag FC is set to "1", the processing is made to shift to the step S42, at which a value with an integer "1" added to the present number N_{c} of trials of the transmission of the initialization signal is calculated as a new number N_{c} of trials before the processing is made to shift to the step S43.

At the step S43, a decision is made as to whether or not the number N_{c} of trials reaches a set number N_{cs} set beforehand. When the number N_{c} of trials is given as N_{c} = N_{cs}, it is judged that an abnormality is to occur in the communication module 21, by which the processing is made to shift to the step S44, at which the function compatible to the communication module 21 is made to be ineffective. Then, the processing is made to shift to the step S45, at which a decision is made as to whether the safety module normal flag FS is set to "1" or not. When the flag FS is set as FS = "1", the processing at starting is made terminated. While, when the flag FS is set as FS = "0", the processing is made to shift to the step S48 that will be explained later.

When the result of the decision at the step S43 is given as N_{c} < N_{cs}, namely the number N_{c} of trials does not reach the set number N_{cs}, the processing is made to shift to the step S46, at which a decision is made as to whether the safety module normal flag FS is set to "1" or not. When the safety module normal flag FS is set to "1", the processing is made to return to the step S31 without any additional processing. When the safety module normal flag FS is reset to "0", the processing is made to shift to the step S48 that will be explained later.

While, when the result of the decision at the step S41 indicates that the communication module normal flag FC is set to "1", the processing is made to shift to the step S47, at which a decision is made as to whether the safety module normal flag FS is set to "1" or not. When the safety module normal flag FS is set to "1", the processing is terminated without any additional processing. While, when the safety module normal flag FS is reset to "0", the processing is made to shift to the step 48.

At the step 48, a value with an integer "1" added to the present number Nₛ of trials of the transmission of the initialization signal is calculated as a new number Nₛ of trials before the processing is made to shift to the step S49.

At the step S49, a decision is made as to whether or not the number Nₛ of trials reaches a set number Nₛₛ set beforehand. When the number Nₛ of trials is given as Nₛ = Nₛₛ, it is judged that an abnormality occurs in the safety module 22, by which the processing is made to shift to the step S50, at which the function compatible to the safety module 22 is made to be ineffective. Then, the processing is made to shift to the step S51, at which a safety module abnormal signal indicating that the safety module 22 is abnormal is transmitted to the communication module 21 before the processing at starting is terminated.

Moreover, when the result of the decision at the step S49 indicates that the number Nₛ of trials does not reach the set number Nₛₛ set beforehand, the processing is made to return to the step S31.

In the control processing, as is shown in FIG. 6, first at the step S61, a decision is made as to whether at least one of the communication module 21 and the safety module 22 is abnormal or not. The decision is made as to, for example, whether the number N_{c} of trials reaches a set number N_{cs} or not or whether the number Nₛ of trials reaches a set number Nₛₛ or not. When the result of the decision indicates that at least one of the communication module 21 and the safety module 22 is abnormal, the processing is made to shift to the step S62, at which the name of the abnormal module is displayed on the display unit 26 before the control processing is terminated without any additional processing. When both of the communication module 21 and the safety module 22 are normal, the process is made to shift to the step S63.

At the step S63, a decision is made as to whether or not both of the safety signals SS1 and SS2 have been received from the communication module 21 and the safety module 22, respectively. When at least one of the safety signals SS1 and SS2 of their respective communication module 21 and safety module 22 is not received, the processing is made to wait until the both of the safety signals SS1 and SS2 are received. When both of the safety signals SS1 and SS2 are received, the processing is made to shift to the step S64.

At the step S64, the received safety signal SS1 and SS2 are compared. Then, the processing is made to shift to the step S65, at which a decision is made as to whether the result of the comparison indicates that there is a difference between the safety signals SS1 and SS2 or not. When there is a difference between the safety signals SS1 and SS2, the processing is made to shift to the step S66, at which emergency stopping processing is carried out before the control processing is terminated.

When the result of the comparison indicates that there is no difference between the safety signals SS1 and SS2, that is, the safety signals SS1 and SS2 are identical, the processing is made to shift to the step S67, at which a decision is made as to whether safety processing is specified in each of the safety signals SS1 and SS2 or not. When the safety processing is specified, the processing is made to shift to the step S68, at which various kinds of safety operations are carried out according to the safety processing before the processing is made to return to the step S61.

When the result of the decision at the step S67 indicates that no safety processing is specified, the processing is made to shift to the step S69, at which a decision is made as to whether a command signal from the communication module 21 is received or not. When no command signal is received, the processing is made to wait until the command signal is received. When the command signal is received, the process is made to shift to the step S70.

At the step S70, a control signal that controls the motor 25 is produced on the basis of the command signal. Then, the processing is made to shift to the step S71, at which the control signal is transmitted to the electric power converter 23 before the process is made to return to the step S61.

Subsequent to this, an operation of the embodiment will be explained.

Now, suppose that the external controller 1 and a plurality of the safety communication compatible inverter systems 2 are connected.

In this state, when the operation of the inverter system 2 compatible to the safety communication is made started up by turning the power on, the processing at starting shown in FIG. 5 is carried out first in the control unit 24. In the processing at starting, an initialization signal is transmitted to the central processing unit 21b in the communication module 21 and the central processing unit 22a in the safety module 22 (step S31). Then, the software timer is made stated up which is set foe an allowed time from the transmission of the initialization signal to the reception of the initialization completion signals from the central processing units 21b and 22a (step S32). Following this, a decision is made as to whether or not the initialization completion signal is received from the central processing unit 21b or 22a (step S33).

Then, in each of the central processing unit 21b in the communication module 21 and the central processing unit 22a in the safety module 22, on receiving an initialization signal from the control unit 24, specified initialization processing is carried out. When the initialization processing is normally completed, an initialization completion signal is transmitted to the control unit 24. While, when the initialization processing is not normally completed, the outputting of the initialization completion signal is stopped.

Therefore, when both of the central processing unit 21b in the communication module 21 and the central processing unit 22a in the safety module 22 have normally completed the initialization processing, the initialization completion signals are transmitted to the control unit 24.

In the control unit 24, on receiving the initialization completion signal from the central processing unit 21b in the communication module 21, a function compatible to the communication module 21 is made effective before the communication module normal flag FC is set to "1".

In the same way, in the control unit 24, on receiving the initialization completion signal from the central processing unit 22a in the safety module 22, a function compatible to the safety module 22 is made effective before the safety module normal flag FS is set to "1".

Therefore, with the normal flags FC and FS of both of the central processing unit 21b in the communication module 21 and the central processing unit 22a in the safety module 22, respectively, set to "1", the processing at starting is terminated.

However, in the control unit 24, when the initialization completion signal from the central processing unit 22a in the safety module 22 is received but no initialization completion signal from the central processing unit 21b in the communication module 21 is received, for example, the communication module normal flag FC is kept to be reset to "0" . Thus, when the result of the decision at the step S33 indicates that no initialization completion signal is received, the processing is made to shift to the step S40, at which a decision is made as to whether the time set in the software timer is up or not. When the set time is not up yet, the processing is made to return to the step S33 to repeat the decision as to whether the initialization completion signal is received or not. When the time set in the software timer is up, the processing is made to shift to the step S41. At the step S41, the communication module normal flag FC reset to "0" makes the processing shift to the step 42, at which the number N_{c} of trials is incremented by an integer "1" to be N_{c} = 1. At this time, the number N_{c} of trials does not reach to the set number N_{cs}. Thus, the processing is made to shift to the step 46. In this case, since the safety module normal flag FS is set to "1", the processing is made to return from the step S46 to the step S31.

At the step S31, the safety module normal flag FS set to "1" and the communication module normal flag FC set to "0" makes the initialization signal transmitted only to the central processing unit 21b in the communication module 21. The processing is then made to shift to the step S32, at which the software timer is made to start again to initiate timing and the processing is thereafter made to wait reception of the initialization completion signal from the central processing unit 21b in the communication module 21.

When the retransmission of the initialization completion signal to the central processing unit 21b in the communication module 21 is repeated with the initialization completion signal from the central processing unit 21b received before the number N_{c} of trials reaches the set number N_{cs} of trials, the processing is made to shift from the step S33 to the step S35 through the step S34. At the step S35, a function compatible to the communication module is made effective to set the communication module normal flag FC to "1". Thus, the processing is made to shift to the step S39 to terminate the processing at starting.

However, when the number N_{c} of trials reaches the set number N_{cs} with the retransmission of the initialization signal to the central processing unit 21b in the communication module 21 repeated, the processing is made to shift from the step S43 to the step S44, at which the function compatible to the communication module is made ineffective before the processing is made to shift to the step S45. At the step S45, the safety module normal flag FS set to "1" makes the processing at starting terminated.

In the same way, when the number Nₛ of trials reaches a set number Nₛₛ without reception of the initialization completion signal from the central processing unit 22a in the safety module 22, the safety module compatible function is made to be ineffective and, along with this, a safety module abnormal signal is transmitted to the central processing unit 21b in the communication module 21 before the processing at starting is terminated.

Then, in the central processing unit 21b in the communication module 21, on completing the initialization processing by receiving the initialization signal, the central processing unit 21b transmits an initialization completion signal to the control unit 24 and, along with this, executes the communication and safety processing shown in FIG. 3. In the communication and safety processing, a decision is made as to whether or not the communication message M1 has been received from the external controller 1 (step S1). When no communication message M1 is received, the processing is made to wait until the communication message M1 is received. When the communication message M1 is received, the processing is made to shift to the step S2.

At the step S2, a decision is made as to whether there is the presence of the safety module 22 or not. The decision is carried out by the processing at starting of the control unit 24 in that a decision is made as to whether a safety module abnormal signal is being received or not. When there is no presence of the safety module 22, a command signal is produced on the basis of the control command stored in the control command storage region 13 in the communication message M1 (step S4). The produced command signal is transmitted to the control unit 24 before the processing is made returned to the step S1.

While, when the result of the decision made at the step S2 indicates the presence of the safety module 22, the processing is made to shift to the step S3, at which a decision is made as to whether or not the safety function setting signal is included in the communication message M1. When no safety function setting signal is included, the processing is made to shift to the step S4, at which a command signal is produced on the basis of the control command. When the safety function setting signal is included, the processing is made to shift to the step S6, at which the safety function setting signal is divided from the communication message M1 (step 6) and the divided safety function setting signal is transmitted to the central processing unit 22a in the safety module 22 (step S7) .

Next to this, error checking of the safety function setting signal is carried out (step S8). When any error is found in the safety function setting signal, emergency stopping processing that stops the motor 25 is executed before the communication and safety processing is terminated.

When no error is found in the safety function setting signal, a safety signal SS1 is produced by carrying out safety signal processing on the basis of the safety function setting signal (step S10). Then, the produced safety signal SS1 is transmitted to the control unit 24 (step S11).

In the central processing unit 22a of the safety module 22, when an initialization signal is received to make the initialization processing completed, the initialization completion signal is transmitted to the control unit 24 and, along with this, the safety processing shown in FIG. 4 is executed. In the safety processing, a decision is first made as to whether or not the safety function setting signal is received from the central processing unit 21b in the communication module 21. When no safety function setting signal is received, the processing is made to wait until the signal is received. When the safety function setting signal is received, the processing is made to shift to the step S22.

At the step S22, like the previously explained communication and safety processing in the communication module 21, error checking of the safety function setting signal is carried out. When any error is found in the safety function setting signal, emergency stopping processing that stops the motor 25 is executed before the communication and safety processing is terminated.

When no error is found in the safety function setting signal, safety signal processing is carried out on the basis of the safety function setting signal to produce a safety signal SS2 (step S24). Then, the produced safety signal SS2 is transmitted to the control unit 24 (step S25).

The control unit 24, on terminating the processing at starting, executes the control processing shown in FIG. 6. In the control processing, when both of the central processing unit 21b in the communication module 21 and the central processing unit 22a in the safety module 22 are normal in the processing at starting, the processing is made to shift from the step S61 to the step S63, at which a decision is made as to whether or not a safety signal SS1 is received from the central processing unit 21b in the communication module 21 and, along with this, a safety signal SS2 is received from the central processing unit 22a in the safety module 22. When none of the safety signals SS1 and SS2 are received, the processing is made to wait until the safety signals SS1 and SS2 are received. When the safety signals SS1 and SS2 are received, the received safety signals SS1 and SS2 are compared (step S64) to make a decision as to whether there is a difference between the safety signals SS1 and SS2 or not (step S65).

When there is a difference between the received safety signals SS1 and SS2, emergency stopping processing is carried out, in which the driving of the motor 25 is stopped by the electric power converter 23 (step S66) before the control processing is made terminated.

When no difference is found between the safety signals SS1 and SS2, however, a decision is made that both of the safety processing executed in the central processing unit 21b in the communication module 21 and the safety processing executed in the central processing unit 22a in the central processing unit 22a are normal and the processing is made to shift to the step S67. At the step S67, a decision is made as to whether or not each of the safety signal SS1 and the safety signal SS2 includes the safety processing. When the safety processing is included, the processing is made to shift to the step S68, at which various kinds of safety operations corresponding to the safety processing are executed before the processing is made to return to the step S61.

When the result of the decision at the step S67 indicates that no safety processing is included in each of the safety signals SS1 and SS2, the processing is made to shift to the step S69, at which a decision is made as to whether or not a command signal is received from the central processing unit 21b in the communication module 21. When no command signal is received, the processing is made to wait until the command signal is received. When the command signal is received, the processing is made to shift to the step S70, at which a control signal to the electric power converter 23 is produced on the basis of the command signal and, at the step S71, the produced control signal is transmitted to the electric power converter 23 before the processing is made to return to the step S61.

In this way, according to the embodiment, the redundant safety processing normally executed in the safety module 22 is divided into two tasks, one of which is made to be executed together with the task of the communication processing in the central processing unit 21b in the communication module 21 and the results of the execution of both tasks are made to be unified in the control unit 24. Thus, it is unnecessary for the safety module 22 to provide a plurality of central processing units and, along with this, it is also unnecessary for the communication module 21 to additionally increase central processing units. This can reduce the number of central processing units necessitated in the inverter system 2 to a minimum necessary to make it possible to reduce the manufacturing cost.

Therefore, the safety function of the inverter system 2 can be made redundant with the number of the central processing units reduced and the configuration of the system simplified to make it possible to simplify the product design, reduce the manufacturing cost and reduce the failure probability. In addition, by reducing the number of the central processing units, the frequency of the communications among the processing units is reduced to make it possible to shorten the delay time from the reception of a safety signal at the communication module 21 to the initiation of the safety operation in the control unit 24.

Moreover, in the embodiment, when any one of the communication module 21 and the safety module 22 becomes abnormal, the name of the module being abnormal is displayed on the display unit 26. This makes it possible to easily carry out identification of a module became abnormal.

In the embodiment, an explanation was made with respect to the case in which the safety function is made redundant by the safety module 22 and the communication module 21. The invention, however, is not limited to this, but the safety function can be made redundant by the safety module 22 and the processing unit in the control unit 24.

In addition, in the embodiment, an explanation was made with respect to the case of applying a central processing unit (CPU) to the processing unit. The processing unit, however, is not limited to this but another processing unit such as a microprocessor unit (MPU) can be applied.

## Claims

1. An inverter system (2) comprising:
a communication processing section (21) having a communication integrated circuit (21a) connectable to a network (3) for carrying out transmission and reception of communication data (M1) with an external controller (1) through the network (3);
an electric power converter (23) configured for driving a motor (25)
a control unit (24) configured for outputting a control signal to the electric power converter (23) on the basis of the communication data (M1), the electric power converter (23) being configured to drive a motor (25); and
a safety processing section (22) comprising a processing unit (22a) and having a safety function set by the communication data (M1),
the communication processing section (21) being provided with a processing unit (21b) configured for executing a part of the safety function of the safety processing section (22) in addition to a communication function,
wherein the processing unit (21b) of the communication processing section (21) is configured for:
determining (S3) whether a safety function setting signal is included in the received communication data (M1);
if the safety function setting signal is included in the received communication data (M1), dividing (S6) the data part of the communication data (M1) containing a control command and the safety function setting signal into the control command the safety function setting signal;
transmitting (S7) the safety function setting signal comprised in the communication data (M1) to the safety processing section (22);
error checking (S8) the safety function setting signal;
if it is determined (S9) that no error is found in the result of the error checking, carrying out (S10) safety signal processing on the basis of the safety function setting signal to produce a first safety signal (SS1) corresponding to the safety function setting signal, and transmitting (S11) the produced first safety signal (SS1) to the control unit (24); and
if it is determined (S9) that an error is found in the result of the error checking, carrying out emergency stopping processing (S12) for stopping the motor (25),
wherein the processing unit (22a) of the safety processing section (22) is configured for:
error checking (S22) the safety function setting signal, and
if it is determined (S23) that no error is found in the result of the error checking, carrying out (S24) safety signal processing on the basis of the safety function setting signal to produce a second safety signal (SS2) corresponding to the safety function setting signal, and transmitting (S25) the produced second safety signal (SS2) to the control unit (24); and
if it is determined (S23) that an error is found in the result of the error checking, carrying out (S26) emergency stopping processing for stopping the motor (25),
wherein the control unit (24) is configured for:
comparing (S64) the received first (SS1) and second (SS2) safety signals;
if there is a difference between the first (SS1) and second (SS2) safety signals, emergency stopping processing is carried out (S66) for stopping the motor (25); and
if there is no difference between the first (SS1) and second (SS2) safety signals, various kinds of safety operations are carried out according to the safety processing specified in the first (SS1) and second (SS2) safety signals.

## Patentansprüche

1. Wechselrichtersystem (2), umfassend:
einen Kommunikationsverarbeitungsteil (21) mit einer integrierten Kommunikationsschaltung (21a), die mit einem Netzwerk (3) zum Ausführen von Senden und Empfangen von Kommunikationsdaten (M1) mit einer externen Steuerung (1) durch das Netzwerk (3) verbindbar ist;
einen elektrischen Stromwandler (23), der zum Ansteuern eines Motors (25) konfiguriert ist,
eine Steuereinheit (24), die konfiguriert ist zum Ausgeben eines Steuersignals an den elektrischen Stromwandler (23) basierend auf den Kommunikationsdaten (M1), wobei der elektrische Stromwandler (23) konfiguriert ist, einen Motor (25) anzusteuern; und
einen Sicherheitsverarbeitungsteil (22), der eine Verarbeitungseinheit (22a) umfasst und eine durch die Kommunikationsdaten (M1) eingestellte Sicherheitsfunktion aufweist,
wobei der Kommunikationsverarbeitungsteil (21), mit einer Verarbeitungseinheit (21b) versehen ist, die konfiguriert ist, zusätzlich zu einer Kommunikationsfunktion einen Teil der Sicherheitsfunktion des Sicherheitsverarbeitungsteils (22) auszuführen,
wobei die Verarbeitungseinheit (21b) des Kommunikationsverarbeitungsteils (21) konfiguriert ist zum:
Bestimmen (S3), ob ein Sicherheitsfunktionseinstellungssignal in den empfangenen Kommunikationsdaten (M1) beinhaltet ist;
wenn das Sicherheitsfunktionseinstellungssignal in den empfangenen Kommunikationsdaten (M1) beinhaltet ist, Aufteilen (S6) des Datenteils der Kommunikationsdaten (M1), der einen Steuerbefehl und das Sicherheitsfunktionseinstellungssignal enthält, in den Steuerbefehl und das Sicherheitsfunktionseinstellungssignal;
Senden (S7) des Sicherheitsfunktionseinstellungssignals, das in den Kommunikationsdaten (M1) beinhaltet ist, an den Sicherheitsverarbeitungsteil (22);
Kontrollieren auf Fehler (S8) im Sicherheitsfunktionseinstellungssignal;
wenn (S9) bestimmt ist, dass kein Fehler im Resultat der Fehlerkontrolle gefunden wurde, Ausführen (S10) von Sicherheitssignalverarbeitung basierend auf dem Sicherheitsfunktionseinstellungssignal, um ein erstes Sicherheitssignal (SS1) entsprechend dem Sicherheitsfunktionseinstellungssignal zu erzeugen, und Senden (S11) des erzeugten ersten Sicherheitssignals (SS1) an die Steuereinheit (24); und
wenn (S9) bestimmt ist, dass ein Fehler im Resultat der Fehlerkontrolle gefunden wurde, Ausführen einer Not-Halt-Verarbeitung (S12) zum Stoppen des Motors (25),
wobei die Verarbeitungseinheit (22a) des Sicherheitsverarbeitungsteils (22) konfiguriert ist zum:
Kontrollieren auf Fehler (S22) im Sicherheitsfunktionseinstellungssignal, und
wenn (S23) bestimmt ist, dass kein Fehler im Resultat der Fehlerkontrolle gefunden wurde, Ausführen (S24) einer Sicherheitssignalverarbeitung basierend auf dem Sicherheitsfunktionseinstellungssignal, um ein zweites Sicherheitssignal (SS2) entsprechend dem Sicherheitsfunktionseinstellungssignal zu erzeugen, und Senden (S25) des erzeugten zweiten Sicherheitssignals (SS2) an die Steuereinheit (24); und
wenn bestimmt ist (S23), dass ein Fehler im Resultat der Fehlerkontrolle gefunden wurde, Ausführen (S26) einer Not-Halt-Verarbeitung zum Stoppen des Motors (25),
wobei die Steuereinheit (24) konfiguriert ist zum:
Vergleichen (S64) des empfangenen ersten (SS1) und zweiten (SS2) Sicherheitssignals;
wenn es einen Unterschied zwischen dem ersten (SS1) und zweiten (SS2) Sicherheitssignal gibt, wird eine Not-Halt-Verarbeitung (S66) zum Stoppen des Motors (25) ausgeführt; und
wenn es keinen Unterschied zwischen dem ersten (SS1) und zweiten (SS2) Sicherheitssignal gibt, werden verschiedene Arten von Sicherheitsoperationen gemäß der Sicherheitsverarbeitung, die in dem ersten (SS1) und zweiten (SS2) Sicherheitssignal spezifiziert sind, ausgeführt.

## Revendications

1. Système d'onduleur (2) comprenant:
une section de traitement de communication (21) ayant un circuit intégré de communication (21a) connectable à un réseau (3) pour effectuer l'émission et la réception de données de communication (M1) avec un contrôleur externe (1) via le réseau (3);
un convertisseur de puissance électrique (23) configuré pour entraîner un moteur (25),
une unité de commande (24) configurée pour faire sortir un signal de commande à l'attention du convertisseur d'énergie électrique (23) sur la base des données de communication (M1), le convertisseur de puissance électrique (23) étant configuré pour entraîner un moteur (25); et
une section de traitement de sécurité (22) comprenant une unité de traitement (22a) et ayant une fonction de sécurité réglée par les données de communication (M1),
la section de traitement de communication (21) étant dotée d'une unité de traitement (21b) configurée pour exécuter une partie de la fonction de sécurité de la section de traitement de sécurité (22) en plus d'une fonction de communication,
dans lequel l'unité de traitement (21b) de la section de traitement de communication (21) est configurée pour:
déterminer (S3) si un signal de réglage de fonction de sécurité est compris dans les données de communication (M1) reçues;
si le signal de réglage de fonction de sécurité est compris dans les données de communication (M1) reçues, la division (S6) de la partie de données des données de communication (M1) contenant une instruction de commande et le signal de réglage de fonction de sécurité en l'instruction de commande et le signal de réglage de fonction de sécurité;
la transmission (S7) du signal de réglage de fonction de sécurité compris dans les données de communication (M1) à la section de traitement de sécurité (22);
une vérification d'erreur (S8) du signal de réglage de fonction de sécurité;
si l'on détermine (S9) qu'aucune erreur n'est trouvée dans le résultat de la vérification d'erreur, la réalisation (S10) d'un traitement de signal de sécurité sur la base du signal de réglage de fonction de sécurité pour produire un premier signal de sécurité (SS1) correspondant au signal de réglage de fonction de sécurité, et la transmission (S11) du premier signal de sécurité (SS1) produit à l'unité de commande (24); et
si l'on détermine (S9) qu'une erreur est trouvée dans le résultat de la vérification d'erreur, la réalisation d'un traitement d'arrêt d'urgence (S12) pour arrêter le moteur (25),
dans lequel l'unité de traitement (22a) de la section de traitement de sécurité (22) est configurée pour:
la vérification d'erreur (S22) du signal de réglage de fonction de sécurité, et
si l'on détermine (S23) qu'aucune erreur n'est trouvée dans le résultat de la vérification d'erreur, la réalisation (S24) d'un traitement de signal de sécurité sur la base du signal de réglage de fonction de sécurité pour produire un deuxième signal de sécurité (SS2) correspondant au signal de réglage de fonction de sécurité, et la transmission (S25) du deuxième signal de sécurité (SS2) produit à l'unité de commande (24); et
si l'on détermine (S23) qu'une erreur est trouvée dans le résultat de la vérification d'erreur, la réalisation (S26) d'un traitement d'arrêt d'urgence pour arrêter le moteur (25),
dans lequel l'unité de commande (24) est configurée pour:
comparer (S64) les premier (SS1) et deuxième (SS2) signaux de sécurité reçus;
s'il y a une différence entre les premier (SS1) et deuxième (SS2) signaux de sécurité, le traitement d'arrêt d'urgence est effectué (S66) pour arrêter le moteur (25); et
s'il n'y a pas de différence entre les premier (SS1) et deuxième (SS2) signaux de sécurité, différents types d'opérations de sécurité sont effectués en fonction du traitement de sécurité spécifié dans les premier (SS1) et deuxième (SS2) signaux de sécurité.
